# EUROPEAN PATENT APPLICATION

(11) **EP 3 086 055 A1**
(43) Date of publication of application: **26.10.2016**
(21) Application number: 16166027.9
(22) Date of filing: 19.04.2016
(51) Int. Cl.: F24J 3/08, F28D 20/00

(54) **GROUND HEAT EXCHANGER**

(30) Priority: 20.04.2015 SK 500352015 U
(71) Applicant: Zilinská Univerzita V Ziline, 010 26 Zilina (SK); ETOP Alternative Energy, s.r.o., 911 01 Trencin (SK)
(72) Inventor: Gottwald, Michal, 010 01 Zilina (SK); Luká , Vladimír, 020 01 Púchov (SK)
(74) Representative: Kubinyi, Peter

(57) **Abstract**

Ground heat exchanger (1) is composed of tubular body (2), which is provided by means for pressing, ramming or drilling-screwing into the ground, where a chamber (13), comprising means (10) for distribution of the heat transfer medium and/or the heat transfer medium for the transfer of heat to the tubular body (2) connected to the inlet (8) and/or the outlet (9) of the heat transfer medium is disposed within a hollow (6) of the tubular body (2).

## Description

### Technical Field

Technical solution relates to ground heat exchangers for transfer of heat from and to the ground

### Background Art

At present, to transfer surplus heat of solar energy systems plastic pipes arranged in loops that are inserted with minimal insulation vertically or horizontally into wells or channels are used, but involve the large volume of ground works.

Document WO 8100754 A1 discloses underground low temperature heat accumulator for the storage of solar energy from a solar collector. This accumulator comprises buried pipes composed of an outer pipe and an inner pipe as the exchanger of heat from and to the ground. The inner pipe ends at the bottom of the outer pipe, while supplying heat by means of a fluid flowing from the solar panels to the outer pipe. Heat is then transferred from the outer pipe to the ground. In this solution, the pipes are buried in the ground in inclined position, such that their ends at the surface are as close as possible to each other to minimize dimensions of the central shaft of the heat accumulator and to increase accumulation volume in the soil. This solution, however, still consider vast ground works for burying the pipes.

### Summary of invention

Disadvantages of the prior art are substantially eliminated by the ground heat exchanger of tubular shape having inlet and/or outlet means for heat transfer medium according to this technical solution, characterized in that it is composed of tubular body, which is provided by means for pressing, ramming or drilling-screwing into the ground, where a chamber, comprising means for distribution of the heat transfer medium and/or the heat transfer medium for the transfer of heat to the tubular body connected to the inlet and/or the outlet of the heat transfer medium is disposed within a hollow of the tubular body.

The means for pressing, ramming or drilling-screwing into the ground are preferably piercing and/or drilling bit, thread on the drilling bit and/or the tubular body and a flange or means for connecting a drilling-screwing or pressing mechanism.

The heat exchanger according to this technical solution in one of the most preferred embodiments can be a ground needle, which is composed of the tubular body provided at one end by piercing bit, where a chamber in the hollow of this body is defined by a wall between this tubular body and the piercing bit and the flange provided by the inlet and/or the outlet of the heat transfer medium.

The heat exchanger in another of the most preferred embodiments can be a ground screw, which is composed of the tubular body provided at one end by drilling bit with a thread or threads on the drilling bit and/or the tubular body, where a chamber in the hollow of the tubular body is defined by a wall between the tubular body and the drilling bit and the flange provided by the inlet and/or the outlet of the heat transfer medium. Drilling bit can preferably be provided by piercing bit at its tip, what makes drilling-screwing in of the heat exchanger to hard or rocky soils easier.

The tubular body can preferably be provided on its outer side by means for enlarging the outer surface of this body. In case of the heat exchanger having drilling thread, the outer surface of the tubular body of the exchanger is preferably enlarged by this thread itself.

The heat exchanger is pressed, rammed or drilled-screwed into the ground while no excavations are necessary. In case of hard or rocky soils, pre-drilling or test drilling can be carried out, which bore diameter is however always smaller than outer diameter of the tubular body. In such application, the vicinity of the tubular body is locally compacted, what enhances heat transfer between the soil and the exchanger body. The heat transfer medium flows within the heat exchanger. The heat exchanger transfers heat through its body into the soil. In case the heat exchanger is made to be drilled-screwed in, the heat transfer is also enhanced by surface of the thread, because the outer transfer surface is enlarged. In case of the exchanger designed for pressing or ramming in, the outer transfer surface can be enlarged by additional surfaces, which are provided in direction of the axis of the tubular body such that not to hinder the pressing or ramming the heat exchanger into the ground.

This heat exchanger eliminates the most common problem, what is expensive drilling of deep wells or wide area excavations for ground accumulator.

The heat exchanger according to this technical solution also allows combining the function of foundations for simple building construction with function of the heat exchanger. The body of the exchanger after its application to the ground thus creates, from the mechanical perception, the ground anchor, to which above ground construction can be attached.

### Brief description of drawings

Technical solution is better explained on attached drawings, wherein
Fig. 1 shows side sectional view of the heat exchanger according to this technical solution, in the form of ground needle, with free flowing liquid heat transfer medium supplied to the chamber of the tubular body;
Fig. 2 shows side view of the heat exchanger according to this technical solution, in the form of ground needle, with means to enlarge the outer surface of the tubular body;
Fig. 3 shows side sectional view of the heat exchanger according to this technical solution, in the form of ground screw, with free flowing liquid heat transfer medium supplied to the chamber of the tubular body ;
Fig. 4 shows side sectional view of the heat exchanger according to this technical solution, in the form of ground screw, with separat circuit of the liquid heat transfer medium in the chamber of the tubular body, wherein the chamber is filled with separate liquid heat transfer medium;
Fig. 5 shows side sectional view of the heat exchanger according to this technical solution, in the form of ground screw, with separate circuit of the liquid heat transfer medium in the chamber of the tubular body, wherein the chamber is filled with solid heat transfer medium;
Fig. 6 shows side view of elements for enlarging of the total outer active surface of the exchanger body, in the form of flat thread;
Fig. 7 shows side view of elements for enlarging of the total outer active surface of the exchanger body, in the form of plates in direction of axis of the tubular body;
Fig. 8 shows elements for enhancing of heat transfer and heat distribution in the chamber, in section of the tubular body.

### Description of embodiments

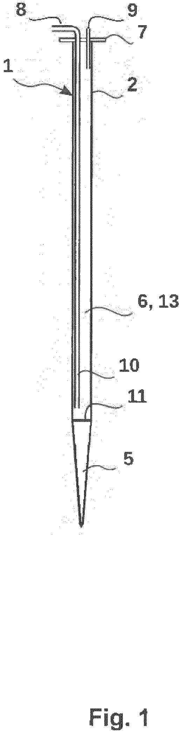

Heat exchanger 1 according to this technical solution, according to Fig. 1, is in the form of ground needle. The exchanger 1 comprises the tubular body 2 provided at one end by piercing bit 5. The tubular body is at the other end provided by a flange 7 having means for connecting the inlet 8 and the outlet 9 of heat transfer medium, where in this example, this flange 7 at the same time serves as a closure of the hollow 6 of the tubular body 2. This flange 7, this end of the tubular body 2 respectively, also comprises means for attaching the pressing or ramming mechanism, when pressing or ramming the exchanger 1 into the ground. In case the exchanger 1 also serves as foundations of building structure, said end of the tubular body 2 comprises means for attaching the above ground part of building structure. Said means for attaching of the pressing or ramming mechanism, as well as means for attaching the above ground part of building structure are known, and need not to be further described. Also, for the sake of clarity, such means are not shown in drawings.

In this embodiment, the tubular body 2 is separated from the piercing bit 5 by a wall 11, which can be formed by the bottom of the tubular body 2. Such, the chamber 13 is created in the hollow 6 of the tubular body, within which the means 10 for distribution of the heat transfer medium are disposed. Means 10 for distribution of the heat transfer medium are in this example formed by a pipe with free end in the chamber 13 near the bottom of the tubular body 2, i.e. near the wall 11 between the tubular body 2 and the piercing bit 5. The flange 7 and the wall 11 in this example close the chamber 13 tightly, so that such exchanger 1 is suitable for application of liquid heat transfer medium, which is filled freely in the chamber 13. Dimensions of the chamber 13 in the tubular body 2, as well as dimensions of the tubular body 2 are determined by calculating the transfer or reception of heat, geologic conditions, or static requirements in case the exchanger 1 serves also as foundations for building structure.

In this embodiment, the exchanger 1 works as follows:

The exchanger 1 is by pressing or ramming mechanism, either manually driven or machine driven, pressed or rammed in known manner into the ground, without any moving of the soil by drilling or excavation.

In case of hard soils, before the exchanger 1 is pressed or rammed into the ground, it is possible to carry out pre-drilling or test drilling, where diameter of a bore is smaller than diameter of the tubular body 2. This drilling is carried out by respectively adjusted ground drill, while in such drilling the soil is preferably not removed from the bore, but is pressed out to the diameter of body of the drill bit used. The exchanger 1 is then pressed or rammed into the bore such prepared.

The inlet 8 and outlet 9 of the heat transfer medium are connected to respective inlet and outlet from the above ground application. The above ground application can be for example solar thermal collector for heating of water, where in this case, the heat exchanger according to this technical solution can serve for transfer and storage of surplus heat from heated water to ground accumulator. Heated water is supplied by the inlet 8 to the means 10 for distribution of the heat transfer medium. Supplied water in this case flows through the means 10 for distribution of the heat transfer medium to the outlet 9, while transferring heat primarily through the tubular body 2 to the soil of the ground accumulator.

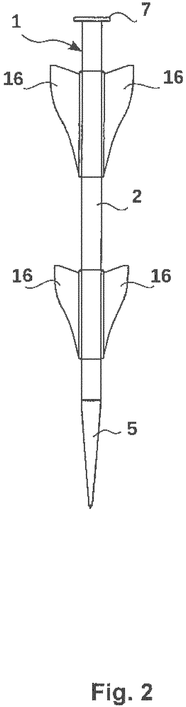

The heat exchanger 1 according to this technical solution, according to Fig. 2, is in the form of ground needle. The exchanger 1 comprises the tubular body 2 provided at one end by piercing bit 5. The tubular body is at the other end provided by the flange 7 having means for connecting the inlet 8 and the outlet 9 of heat transfer medium, where in this example, this flange 7 at the same time serves as a closure of the hollow 6 of the tubular body 2. This flange 7, this end of the tubular body 2 respectively, also comprises means for attaching the pressing or ramming mechanism, when pressing or ramming the exchanger 1 into the ground. In case the exchanger 1 also serves as foundations for building structure, said end of the tubular body 2 comprises means for attaching the above ground part of the building structure. Said means for attaching of the pressing or ramming mechanism, as well as means for attaching the above ground part of the building structure are known, and need not to be further described. Also, for the sake of clarity, such means are not shown in drawings.

In order to increase efficiency of transfer of heat by the exchanger 1 from or into the ground, the exchanger 1 is provided by elements for enlarging the total outer active surface of the exchanger 1. Such elements are in this example provided in the form of plates 16, arranged in direction of axis of the tubular body 2. These are substantially elements in the form of a "fin", which are disposed on the tubular body 2. When the exchanger 1 is pressed or rammed into the ground, these plates 16 are drawn by the tubular body 2 into the ground, to which they are in fact cutting in. As said elements for enlarging the outer surface of the exchanger 1 create extra resistance during its pressing or ramming into the ground, it is favourable to carry out pre-drilling, or test drilling as described in preceding example.

Interior of the exchanger 1as well as working principle are analogous as described in preceding and also in following examples of embodiments.

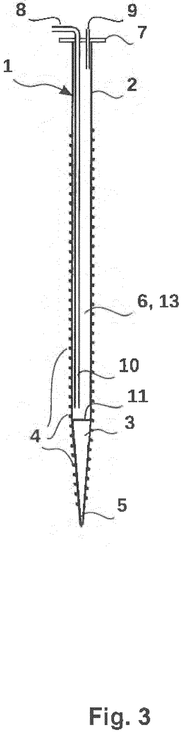

The heat exchanger 1 according to this technical solution, according to Fig. 3, is in the form of ground screw. The exchanger 1 comprises the tubular body 2 provided at one end by drilling bit 3. The drilling bit 3 can be provided by piercing bit 5. This bit 5 is provided on the drilling bit 3 preferably for the exchanger 1 applied in rocky soils. The tubular body is at the other end provided by the flange 7 having means for connecting the inlet 8 and the outlet 9 of heat transfer medium, where in this example, this flange 7 at the same time serves as a closure of the hollow 6 of the tubular body 2. This flange 7, this end of the tubular body 2 respectively, also comprises means for attaching the drilling-screwing mechanism, when screwing the exchanger 1 into the ground. In case, the exchanger 1 also serves as foundations for building structure, said end of the tubular body 2 comprises means for attaching the above ground part of building structure. Said means for attaching of the drilling-screwing mechanism, as well as means for attaching the above ground part of building structure are known, and need not to be further described. Also, for the sake of clarity, such means are not shown in drawings.

The exchanger 1 is provided by drilling thread 4 on the drilling bit 3, where in this example the thread 4 extends onto the tubular body 2 of the exchanger 1. The thread 4 on the tubular body 2 simultaneously enlarges surface for transfer of heat into the ground. However, the embodiments are also possible, where the thread 4 is on the drilling bit 3 only or it extends only onto small portion of the tubular body 2. This is possible with easily penetrable soils, whereas it is possible to save certain costs for production of the heat exchanger according to this invention, but on the account of decreasing the surface for heat transfer.

In this embodiment, the tubular body 2 is separated from the drilling bit 3 by the wall 11, which can be formed by the bottom of the tubular body 2. Such, the chamber 13 is created in the hollow 6 of the tubular body, within which the means 10 for distribution of the heat transfer medium are disposed. Means 10 for distribution of the heat transfer medium are in this example formed by a pipe with free end in the chamber 13 near the bottom of the tubular body 2, i.e. near the wall 11 between the tubular body 2 and the drilling bit 3. The flange 7 and the wall 11 in this example close the chamber 13 tightly, so that such exchanger 1 is suitable for application of liquid heat transfer medium, which fills freely the chamber 13. Dimensions of the chamber 13 in the tubular body 2, as well as dimensions of the tubular body 2 are determined by calculating the transfer or reception of heat, geologic conditions, or static requirements in case the exchanger 1 serves also as foundations for building structure.

In this embodiment, the heat exchanger works as follows:

The exchanger 1 is by drilling-screwing mechanism, either manually driven or machine driven, screwed in known manner into the ground, without any moving of the soil by drilling or excavation. The inlet 8 and outlet 9 of the heat transfer medium are connected to respective inlet and outlet from the above ground application. The above ground application can be for example cooler of photovoltaic panels, which are mounted on a structure attached to the heat exchanger 1. Heated water form the cooler is supplied by inlet 8 to the means 10 for distribution of the heat transfer medium. Supplied water in this case fills in the chamber 13 within the tubular body 2, and as being also the heat transfer medium, releases heat primarily through the tubular body 2 to the surrounding soil. Cooled water then returns through the outlet 9 to the cooler of photovoltaic panels.

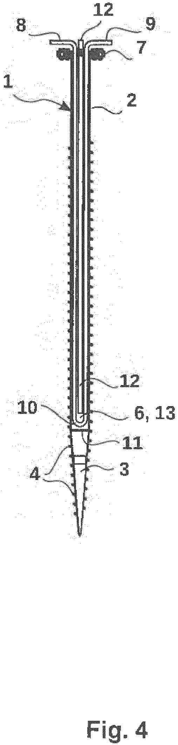

The heat exchanger 1 according to this technical solution, according to Fig. 4, is also in the form of ground screw similar to one on Fig. 1. The exchanger 1 comprises the tubular body 2 provided at one end by drilling bit 3. The tubular body 2 is at the other end provided by the flange 7 having means for connecting the inlet 8 and the outlet 9 of the heat transfer medium, where in this example, this flange 7 at the same time serves as a closure of the hollow 6 of the tubular body 2. This flange 7, this end of the tubular body 2 respectively, can also comprise means for attaching the drilling-screwing mechanism, when screwing the exchanger 1 into the ground. In case the exchanger 1 also serves as foundations for a building structure, said end of the tubular body 2 can comprise means for attaching the above ground part of the building structure. The exchanger 1 is provided by the thread 4 on the drilling bit 3, where in this example the thread 4 extends onto the tubular body 2 of the exchanger 1.

In this embodiment, the tubular body 2 is separated from the drilling bit 3 by the wall 11, which can be formed by the bottom of the tubular body 2, whereby creating the chamber 13, in which the means 10 for distribution of the heat transfer medium are disposed. Means 10 for distribution of the heat transfer medium are in this example formed by U-shaped pipe. In order to increase transfer of heat from supplied heat transfer medium, the means 10 for distribution of heat transfer medium can be suitably designed, arranged or formed to increase efficiency of heat transfer. The mentioned include for example winding of distribution pipe, use of corrugated hose to create turbulent flow, and so on.

The flange 7 and the wall 11 in this example close the chamber 13 tightly. Heat transfer fluid, e.g. water, is supplied to the chamber 13 through the pipe 12, filling up the chamber 13. Besides water, other fluids or mixtures with desired thermal conductivity can be used.

In this embodiment, the heat exchanger works as follows:

The exchanger 1 is by drilling-screwing mechanism, either manually driven or machine driven, screwed in known manner into the ground, without any moving of the soil by drilling or excavation. The inlet 8 and outlet 9 of the heat transfer medium are connected to respective inlet and outlet from the above ground application. The above ground application can be for example solar thermal collector for heating of water, where in this case, the heat exchanger according to this technical solution can serve for transfer and storage of surplus heat of heated water to ground accumulator. Heated water is supplied by inlet 8 to the means 10 for distribution of the heat transfer medium. Supplied water in this case flows through the means 10 for distribution of the heat transfer medium to the outlet 9, while transferring heat to the fluid in the chamber 13, which further transfers heat primarily through the tubular body 2 to the soil of the ground accumulator.

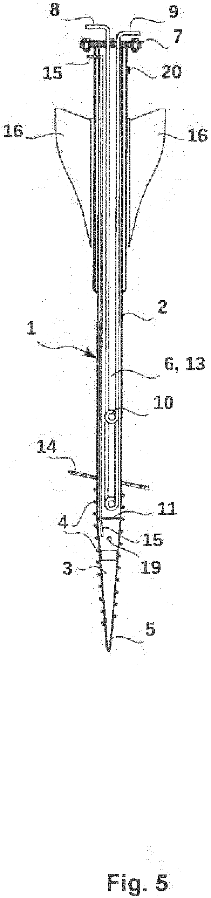

The heat exchanger 1 according to this technical solution, according to Fig. 5, is also in the form of ground screw. The exchanger 1 comprises the tubular body 2 provided at one end by drilling bit 3. The tubular body 2 is at the other end provided by the flange 7 having means for connecting the inlet 8 and the outlet 9 of heat transfer medium, where in this example, this flange 7 at the same time serves as a closure of the hollow 6 of the tubular body 2. Regarding that the hollow 6 comprises solid substance, the connection between the flange 7 and the tubular body 2 does not have to be tight. This flange 7, this end of the tubular body 2 respectively, can also comprise means for attaching the drilling-screwing mechanism, when screwing the exchanger 1 into the ground. In case the exchanger 1 also serves as foundations for a building structure, said end of the tubular body 2 can comprise means for attaching the above ground part of the building structure. The exchanger 1 is provided by the thread 4 on the drilling bit 3 and a part the tubular body 2.

The chamber 13 provided in the hollow 6 of the tubular body 2 is filled with solid heat transfer substance, for example concrete. Means 10 for distribution of heat transfer medium within the chamber 13 are in this case embedded in concrete. Means 10 for distribution of the heat transfer medium are in this example formed by continuous U-shaped pipe, which for better efficiency of heat transfer has coils.

The heat exchanger 1 according to this example also comprises the inlet 15 of moisturizing water, which is realized by a pipe extending from the upper part of the exchanger 1, through the tubular body 2, down to lower part of the exchanger 1, in this case to the bit 3. The pipe of the inlet 15 of moisturizing water ends in the bit 3, in a hollow of the bit 3 respectively, where moisturizing water leaks through openings 19 into the surrounding soil. This solution is preferable in case of dry soil, whereby such moisturizing improves thermal conductivity of the soil.

The inlet 15 of the moisturizing water can also be provided in similar manner on the exchanger 1 in the form of ground needle. In such case, the inlet 15 is realized by a pipe extending from the upper part of the exchanger 1, through the tubular body 2, down to lower part of the exchanger 1, in this case to the piercing bit 5.

The exchanger 1 can also be provided by temperature sensor 20.

In regard to increase in efficiency of transfer of heat by the exchanger 1 from or into the ground, the exchanger 1 is provided by elements for enlarging the total outer active surface of the exchanger 1. These elements can be in the form of flat thread 14, or plates 16 arranged in direction of axis of the tubular body 2.

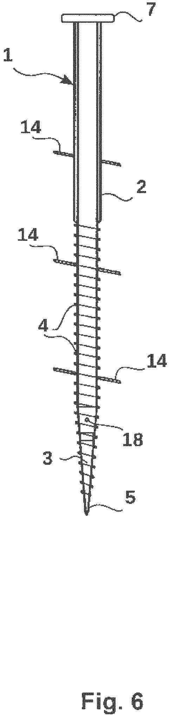

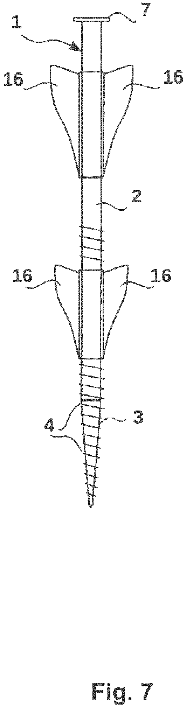

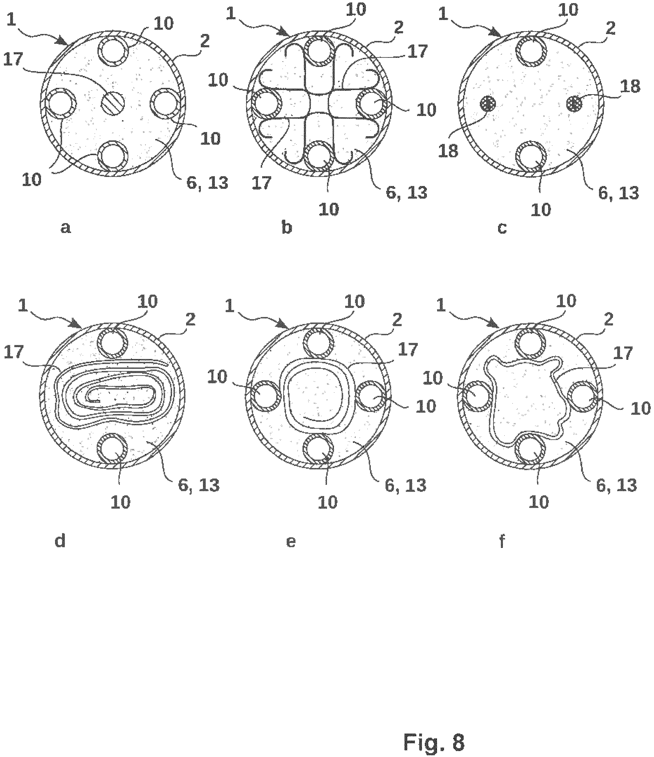

Example of embodiment of the flat thread or threads 14 on the exchanger 1 is shown in Fig. 6. The flat thread or threads 14 can form a part of the thread 4 of the exchanger 1, and/or can be provided independent of the thread 4 of the exchanger 1. Entire thread 4 of the exchanger 1 can also be formed as the flat thread 14. The flat thread or threads 14 can be provided on the tubular body 2 as well as on the drilling bit 3. Example of the plates 16 arranged in direction of axis of the tubular body 2 is shown in Fig. 7. These are substantially elements in the shape of a "fin", which are disposed on the tubular body 2 such that they do not rotate with the exchanger 1 when screwed into the ground. When the exchanger 1 is screwed, these plates 16 are drawn by the tubular body 2 into the ground, to which they are in fact cutting in. As it is clear from Fig. 8, these elements for enlarging the total outer active surface of the exchanger 1 can be combined.

The above described elements 14, 16 are designed to enlarge the total outer active surface of the exchanger 1. The exchanger 1 can further comprise also elements 17, 18 for improving the transfer and distribution of heat within the exchanger 1, i.e. within the hollow 6 or in the chamber 13. Examples of said elements 17, 18 for improving the transfer and distribution of heat are shown in Fig. 6, in variants a, b, c, d, e, f.

The hollow 6, the chamber 13 respectively, is filled with solid substance, e.g. concrete. In this solid substance the means 10 for distribution of heat transfer medium and elements 17, 18 for improving the transfer and distribution of heat are embedded.

In the example according to Fig. 8a, the elements 17 are formed by steel rod disposed substantially at the axis of the chamber 13.

In the example according to Fig. 8b, the elements 17 are formed by series of shaped sheet metal, which are in mutual contact, while contacting the means 10 for distribution of the heat transfer medium and also the tubular body 2.

In the example according to Fig. 8c, the elements 18 for improving, in this case heat transfer, in the form of resistance wires, which can be connected to electric power source are embedded, together with the means 10 for distribution of the heat transfer medium. Such embodiment of the heat exchanger 1 serves especially for increasing the heat input by means of electric current in case an increase of heat in ground heat accumulator is required.

In examples according to Fig. 8d, e, f, the elements 17 are formed by coiled or circled sheet metal, which does not have to be in contact with the means 10 for distribution of the heat transfer medium or with the tubular body 2, Fig. 8d, or this coiled or circled sheet metal is in contact with the means 10 for distribution of heat transfer medium only, Fig. 8e, f.

If necessary, for example to reach greater depths, the tubular body 2 can be composed from several parts. In such case, another part of the tubular body 2 is connected to the tubular body already applied in the ground, and pressing, ramming, or drilling-screwing is continued. Connection of the parts of the tubular body 2 can be realized in known manners for pipe connections, either tight or not tight. Such separate parts of the tubular body 2, can also comprise all possible above described elements for increasing of the total outer active surface of the exchanger 1 either individually or in combination.

### Industrial applicability

The ground exchanger according to this technical solution ca be used anywhere, when it is necessary to create heat transfer from above ground energy application into the ground, with significantly lowered costs for accompanying ground or building works.

## Claims

1. Ground heat exchanger of tubular shape having inlet and/or outlet means for heat transfer medium, **characterized in that** it is composed of tubular body (2), which is provided by means for pressing, ramming or drilling-screwing into the ground, where a chamber (13), comprising means (10) for distribution of the heat transfer medium and/or the heat transfer medium for the transfer of heat to the tubular body (2) connected to the inlet (8) and/or the outlet (9) of the heat transfer medium is disposed within a hollow (6) of the tubular body (2).

2. Ground heat exchanger according to claim 1, **characterized in that** the means for pressing, ramming or drilling-screwing into the ground are chosen from group comprising piercing bit (5), drilling bit (3), drilling thread (4), the flange (7) for connecting the pressing, ramming or drilling-screwing mechanism.

3. Ground heat exchanger according to any of the preceding claims, **characterized in that**, the chamber (13) is separated from the means for pressing, ramming or drilling-screwing into the ground by the wall (11) and/or the flange (7).

4. Ground heat exchanger according to any of the preceding claims, **characterized in that** the tubular body (2) is provided on the outer side by elements for enlarging the outer surface of the tubular body (2).

5. Ground heat exchanger according to claim 4, **characterized in that**, the elements for enlarging the outer surface of the tubular body (2) are chosen from group comprising ground thread (4), flat thread (14), plates (16) arranged in direction of axis of the tubular body (2).

6. Ground heat exchanger according to any of the preceding claims, **characterized in that** the tubular body (2) comprises means for moisturizing the soil.

7. Ground heat exchanger according to claim 6, **characterized in that**, the means for moisturizing the soil are composed of the pipe of the inlet (15) of moisturizing water extending from the upper part of the tubular body (2) to the piercing bit (5) and/or drilling bit (3) and of the openings (19) in the piercing bit (5) and/or the drilling bit (3).

8. Ground heat exchanger according to any of the preceding claims, **characterized in that** the tubular body (2) is composed of two or more mutually connectable parts.
